# EUROPÄISCHE PATENTSCHRIFT

(11) **EP 2 122 382 B1**
(45) Veröffentlichungstag und Bekanntmachung des Hinweises auf die Patenterteilung: **18.04.2012**
(21) Anmeldenummer: 08706846.6
(22) Anmeldetag: 01.02.2008
(51) Int. Cl.: G01S 19/20

(54) **VERFAHREN ZUM ERHÖHEN DER VERFÜGBARKEIT EINES GLOBALEN NAVIGATIONSSYSTEMS**
METHOD FOR INCREASING THE AVAILABILITY OF A GLOBAL NAVIGATION SYSTEM
PROCÉDÉ POUR AUGMENTER LA DISPONIBILITÉ D'UN SYSTÈME DE NAVIGATION GLOBAL

(30) Priorität: 06.02.2007 DE 102007006612
(43) Veröffentlichungstag der Anmeldung: 25.11.2009
(73) Patentinhaber: Astrium GmbH, 81663 München (DE)
(72) Erfinder: RANG, Tanja, 85630 Grasbrunn (DE); TRAUTENBERG, Hans, L., 85521 Ottobrunn (DE)
(74) Vertreter: Hummel, Adam
(86) Internationale Anmeldenummer: PCT/DE2008/000181
(87) Internationale Veröffentlichungsnummer: WO 2008/095468

(56) Entgegenhaltungen:
- EP-A- 1 637 899
- US-A- 5 841 399
- CURTIS A. SHIVELY: "Satellite Criticality Concepts for Unavailability and Unreliability of GNSS Satellite Navigation" PROCEEDINGS OF ION GPS 1993, 22. September 1993 (1993-09-22), Seiten 575-589, XP002483838 Salt Lake City, UT, USA
- OEHLER V ET AL: "User Integrity Risk Calculation at the Alert Limit without Fixed Allocations" ION GNSS. INTERNATIONAL TECHNICAL MEETING OF THE SATELLITEDIVISION OF THE INSTITUTE OF NAVIGATION, WASHINGTON, DC, US, 21. September 2004 (2004-09-21), Seiten 1645-1652, XP002375519

## Beschreibung

Die Erfindung betrifft ein Verfahren zum Erhöhen der Verfügbarkeit eines globalen Navigationssystems, welches mehrere Raumfahrzeuge umfasst, die zur Positionsbestimmung eines Endgeräts jeweils Informationen an das Endgerät übertragen. Die Erfindung betrifft ferner ein Endgerät zum Bestimmen einer Position unter Verwendung eines globalen Navigationssystems.

In einem globalen Navigationssystem, das auf Satelliten basiert, erfordert die genaue Detektion einer spezifizierten Position in Bezug auf die Erde sowohl eine lokale als auch eine globale Integrität der von einer Mehrzahl an Satelliten an das Endgerät übertragenen Informationen. Integrität bedeutet auf der einen Seite die Fähigkeit des globalen Navigationssystems einen Nutzer, d.h. das Endgerät, innerhalb einer vorgegebenen Zeit zu warnen, wenn Teile des Systems für die vorgesehene Bestimmung nicht verwendet werden sollten. Auf der anderen Seite bedeutet Integrität ebenso das Vertrauen, das ein Nutzer in die Zuverlässigkeit der Informationen haben kann, die dieser von dem Navigationssystem erhält. Dies betrifft insbesondere die Genauigkeit der Informationen.

Warnungen sind beispielsweise notwendig, wenn einzelne Satelliten- oder Navigationssignale für die Positionsbestimmung Fehler aufweisen. Solche Fehler treten beispielsweise dann auf, wenn ein Navigationssignal eines Satelliten zur falschen Zeit erstellt wurde (sog. "clock or time correction error") oder an einem fehlerhaften Ort erstellt wurde (sog. "faulty satellite orbit"). Diese Fehler können Einfluss auf die tatsächliche Laufzeit eines Signals von dem Satelliten zu dem Endgerät haben und können daher einen starken Einfluss auf die Genauigkeit der Navigation ausüben.

Um einen Messfehler bei der Positionsbestimmung durch das Endgerät möglichst klein zu halten, werden bei dem bekannten globalen Navigationssystem Galileo die Informationen sämtlicher Satelliten, von denen das Endgerät Informationen erhält, verarbeitet. Diesem Vorgehen liegt die Annahme zugrunde, dass durch eine maximale Anzahl an Messungen, welche jeweils aus den von den jeweiligen Satelliten übertragenen Informationen vorgenommen werden können, sich ein Fehler bei der Positionsbestimmung minimieren lässt. Eine dabei existierende Nebenbedingung ist, dass maximal sechs der Satelliten kritische Satelliten sein dürfen. Ein kritischer Satellit ist definiert als ein Satellit, dessen Informationen zur Positionsbestimmung notwendig sind, um ein Integritätsrisiko unterhalb eines vorgegebenen Schwellenwertes (sog. Tolerierbares oder alloziertes Integritätsrisiko) zu belassen. Aus diesem Grund weist das Endgerät eine Funktion auf, um die Anzahl der kritischen Satelliten in einer Endgerätgeometrie zu bestimmen. Endgerätgeometrie (auch: Nutzergeometrie) bedeutet die Berücksichtigung derjenigen Satelliten, deren Informationen für die Positionsbestimmung verwendet werden sollen.

Aufgrund der in der Praxis hohen Anzahl an zu berücksichtigenden Satelliten (bei Galileo in der Regel 11) und der vorgegebenen Spezifikation von maximal sechs erlaubten kritischen Satelliten ergibt sich in der Praxis eine überproportional hohe Nicht-Verfügbarkeit dessen globalen Navigationssystems.

Aus der EP 1 637 899 A1 ist ein Verfahren zur Berechnung des Integritätsrisikos in einem globalen Navigationssystem bekannt. Das Verfahren basiert auf einer Annahme, wie exakt ein Fehler ermittelt werden kann.

Aus Oehler V., et al.: "User Integrity Risk Calculation at the Alert Limit without Fixed Allocations", ION GNSS, International Technical Meeting of the Satellitedivision of ION, DC, US, 21. September 2004, Seiten 1645 bis 1652, ist ein iteratives Verfahren bekannt, das alle möglichen Signalkombinationen, d.h. n-1 Satellitensignale aus n Satellitensignalen, zum Auffinden eines fehlerhaften Satelliten ermittelt.

Es ist daher Aufgabe der vorliegenden Erfindung, ein Verfahren zum Erhöhen der Verfügbarkeit eines globalen Navigationssystems hinsichtlich der Integrität der Satellitensignale anzugeben, welches mehrere Raumfahrzeuge umfasst, die zur Positionsbestimmung eines Endgeräts jeweils Informationen an das Endgerät übertragen. Es ist ferner Aufgabe der vorliegenden Erfindung, ein Endgerät zum Bestimmen einer Position unter Verwendung eines globalen Navigationssystems anzugeben.

Diese Aufgaben werden durch die Merkmale der unabhängigen Patentansprüche gelöst. Vorteilhafte Ausführungsformen finden sich in den abhängigen Patentansprüchen.

Bei einem erfindungsgemäßen Verfahren zum Erhöhen der Verfügbarkeit eines globalen Navigationssystems, welches mehrere Raumfahrzeuge umfasst, die zur Positionsbestimmung eines Endgerät jeweils Informationen an das Endgerät übertragen, werden von einer Mehrzahl der Raumfahrzeuge jeweils Informationen an das Endgerät übertragen. Aus der Mehrzahl der Raumfahrzeuge werden eine erste Teilmenge mit zumindest einem ersten Raumfahrzeug und eine zweite Teilmenge mit zweiten Raumfahrzeugen ermittelt, Die zweite Teilmenge der Raumfahrzeuge bestimmt sich aus der Differenz zwischen der Mehrzahl der Raumfahrzeuge und der ersten Teilmenge der Raumfahrzeuge. Es wird ausschließlich aus den von den zweiten Raumfahrzeugen übermittelten Informationen ein Integritätsrisiko ermittelt, wobei die erste und die zweite Teilmenge der Raumfahrzeuge iterativ bestimmt werden, so dass das Integritätsrisiko, welches aus den, von den zweiten Raumfahrzeugen übermittelten, Informationen übermittelt wird, gegenüber dem Integritätsrisiko, das aus den Informationen aller Raumfahrzeuge der Mehrzahl an Raumfahrzeugen bestimmt wurde, minimiert ist. Zur Minimierung des integritätsrisikos wird eine Anzahl an Raumfahrzeugen aus der Mehrzahl an Raumfahrzeugen der ersten Teilmenge zugeordnet und das Integritäfisrisiko der in der zweiten Teilmenge verbleibenden zweiten Raumfahrzeuge ermittelt. Dieser Schritt wird für, insbesondere alle, möglichen Kombinationen einer ersten Teilmenge wiederholt. Die Anzahl an Raumfahrzeugen kann prinzipiell beliebig gewählt werden. Zwecksmäßig ist es, die Iteration zunächst mit der Anzahl "1" durchzuführen. Sollte sich keine signifikante Reduktion des Integritätsrisikos ergeben, so kann die Iteration beispielsweise für eine Anzahl "2" wiederholt werden. Dieses Vorgehen kann beliebig erweitert werden. Diejenigen zweiten Raumfahrzeuge der zweiten Teilmenge, bei denen das Integritätsrisiko minimal ist, bilden für einen nächsten Iterationsschritt die Mehrzahl an Raumfahrzeugen. Die oben genannten Schritte werden wiederholt, bis ein minimales Integritätsrisiko erreicht ist. Durch die genannten Verfahrensschritte werden sukzessive diejenigen Raumfahrzeuge von einer Messung zur Bestimmung der Position des Endgeräts ausgeschlossen, welche zur größten Reduzierung des Integritätsrisikos beitragen.

Ein erfindungsgemäßes Endgerät zum Bestimmen einer Position unter Verwendung eines globalen Navigationssystems umfasst Mittel durch Durchführung des erfindungsgemäßen Verfahrens.

Der Erfindung liegt die Erkenntnis zugrunde, dass die Genauigkeit zur Positionsbestimmung des Endgerätes nicht von der Anzahl der zur Verfügung stehenden Messungen abhängt, welche jeweils aus den von den jeweiligen Raumfahrzeugen übertragenen Informationen vornehmbar sind. Vielmehr lässt sich eine hohe Genauigkeit bei der Positionsbestimmung auch durch eine geringere Anzahl an Messungen bestimmen. Durch die Verwendung einer geringeren Anzahl an Raumfahrzeugen für eine Positionsbestimmung kann jedoch gleichzeitig die Verfügbarkeit des Navigationssystems erhöht werden. Dies erfolgt durch Optimierung des Integritätsrisikos.

Die Optimierung erfolgt dabei einerseits hinsichtlich der Unterschreitung eines vorgegebenen tolerierbaren Integritätsrisikos und/oder andererseits hinsichtlich der Anzahl der kritischen Raumfahrzeuge, insbesondere der Unterschreitung einer vorgegebenen maximalen Anzahl an kritischen Raumfahrzeugen. Erreicht werden kann die Optimierung hinsichtlich des Integritätsrisikos und/oder der Anzahl der kritischen Satelliten dadurch, dass solche Raumfahrzeuge aus der Berücksichtigung für eine Positionsbestimmung eliminiert werden, deren Informationen entweder in einem erhöhten Integritätsrisiko oder einer erhöhten Anzahl von kritischen Raumfahrzeugen resultiert. Aus der Mehrzahl der Raumfahrzeuge, von welchen das Endgerät jeweils Informationen empfängt, werden somit in einem Optimierungsverfahren Raumfahrzeuge einer ersten Teilmenge zugeschlagen, welche zur Positionsbestimmung nicht verwendet werden sollen, und einer zweiten Teilmenge, auf Basis deren Informationen die Positionsbestimmung letztlich erfolgen soll. Dabei werden ausschließlich die Informationen der zweiten Teilmenge an Raumfahrzeugen zur Positionsbestimmung des Endgeräts verwendet, während die Informationen der ersten Teilmenge an Raumfahrzeugen nicht zur Positionsbestimmung des Endgeräts verwendet werden.

Dabei wird in einer weitern Ausführungsform überprüft, ob das Integritätsrisiko, das sich durch das sukzessive Entfernen von zumindest einem Raumfahrzeug ergibt, geringer als ein tolerierbares Integritätsrisiko ist. Ist dies der Fall, so ist die Verfügbarkeit des Navigationssystems gegeben.

Gemäß einer weiteren Ausführungsform wird für jedes der zweiten Raumfahrzeuge der zweiten Teilmenge überprüft, ob dieses ein kritisches Raumfahrzeug ist. Dabei ist eine Überprüfung vorgesehen, ob die Anzahl an kritischen Raumfahrzeugen größer als eine Anzahl an erlaubten kritischen Raumfahrzeugen ist. Ist dies der Fall, so wird gemäß einer weiteren Ausgestaltung der Erfindung versucht, die Anzahl der kritischen Satelliten auf eine tolerierbare Anzahl zu reduzieren.

Zur Minimierung der Anzahl an kritischen Raumfahrzeugen wird ein unkritisches Raumfahrzeug aus der ermittelten, insbesondere optimalen, zweiten Teilmenge an Raumfahrzeugen der ersten Teilmenge zugeordnet. Dies bedeutet, das unkritische Raumfahrzeug wird zunächst von den Messungen exkludiert. Dann wird die Anzahl an kritischen Raumfahrzeugen innerhalb der verbleibenden zweiten Teilmenge bestimmt. Diese Schritte werden iterativ wiederholt, bis in der zweiten Teilmenge keine unkritischen Raumfahrzeuge mehr ermittelbar sind. Diesem Vorgehen liegt die Überlegung zugrunde, dass durch das weitere Entfernen eines unkritischen Raumfahrzeugs sich auch die Anzahl der kritjschen Raumfahrzeuge positiv verändern kann. Kann kein unkritisches Raumfahrzeug aus der zweiten Teilmenge mehr entfernt werden und ist nach der Überprüfung der Anzahl der kritischen Teilmenge eine Unterschreitung der vorgegebenen Anzahl an kritischen Raumfahrzeugen nicht erreicht, so findet die Optimierung an dieser Stelle ihr Ende.

Die Minimierung der Anzahl an kritischen Raumfahrzeugen wird zweckmäßigerweise durchgeführt, wenn die Anzahl kritischer Raumfahrzeuge größer als eine maximal erlaubte Anzahl an kritischen Raumfahrzeugen ist.

Von der Erfindung ist ferner ein Computerprogrammprodukt umfasst, das direkt in den internen Speicher eines digitalen Computers geladen werden kann und Softwarecodeabschnitte umfasst, mit denen die Schritte des erfindungsgemäßen Verfahrens ausgeführt werden, wenn das Produkt auf einem Computer läuft.

Die Erfindung wird nachfolgend anhand der Figuren näher erläutert. Es zeigen:
- Fig. 1: eine schematische Darstellung eines globalen Navigationssystems mit beispielhaft elf Raumfahrzeugen, welche jeweils Informationen an ein Endgerät zu dessen Positionsbestimmung übertragen;
- Fig. 2 bis 10: jeweils einen Zustand des globalen Navigationssystems bei der Ausführung des erfindungsgemäßen Verfahrens, und
- Fig. 11: ein exemplarisches Ablaufdiagramm des erfindungsgemäßen Verfahrens.

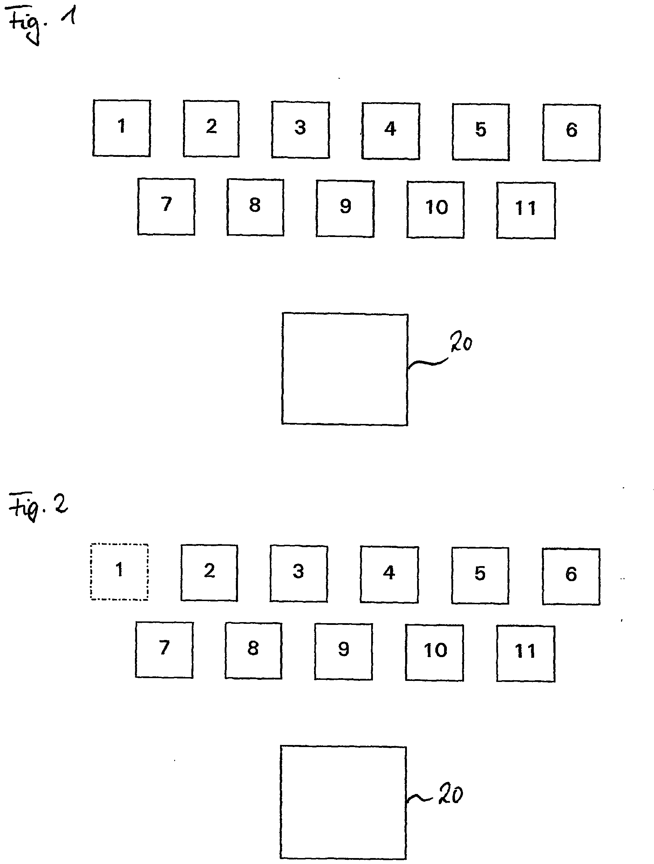

Fig. 1 zeigt ein globales Navigationssystem mit beispielhaft elf Raumfahrzeugen 1, 2, ..., 11, welche jeweils Informationen an ein Endgerät 20 übertragen. Das Endgerät 20 ist in der Lage, aus den von den Raumfahrzeugen 1, 2, ..., 11 übertragenen Informationen eine Positionsbestimmung durchzuführen. Die Raumfahrzeuge werden nachfolgende als Satelliten bezeichnet.

Gemäß dem der Erfindung zugrunde liegenden Verfahren werden zur Positionsbestimmung nicht die Informationen sämtlicher der prinzipiell verfügbaren Satelliten 1, 2, ..., 11 herangezogen, sondern eine hinsichtlich des Integritätsrisikos und einer der Anzahl an kritischen Satelliten optimierten Anzahl an Satelliten. Hierzu wird zunächst versucht, diejenigen Satelliten herauszufinden, deren Entfernen zu einer Verbesserung des Integritätsrisikos führt. Hierzu wird zunächst das Integritätsrisiko bestimmt, das aus den Informationen aller Satelliten 1, 2, ..., 11 bestimmt wird.

Satelliten, deren Informationen im weiteren Verlauf nicht zur Positionsbestimmung des Endgeräts 20 herangezogen werden, gelten einer ersten Teilmenge zugeordnet. Satelliten, die hingegen zur Positionsbestimmung verwendet werden, gelten einer zweiten Teilmenge an Satelliten zugeordnet. Satelliten der ersten Teilmenge sind in den nachfolgend beschriebenen Figuren 2 bis 5 mit einer unterbrochenen Linie dargestellt. Satelliten, die der zweiten Teilmenge zugeordnet sind, sind hingegen mit einer durchgehenden Linie gekennzeichnet.

In einem ersten Schritt wird zunächst ein Satellit der Gesamtanzahl an elf Satelliten der ersten Teilmenge zugeschlagen. In der Darstellung der Fig. 2 wird hierbei mit dem Satelliten 1 begonnen. Es wird das Integritätsrisiko für die, der zweiten Teilmenge zugeordneten, Satelliten 2, ..., 11 ermittelt. Dabei wird überprüft, um welches Maß das Integritätsrisiko durch das Entfernen des Satelliten 1 gegenüber dem Integritätsrisiko, welches für die Gesamtheit der Mehrzahl der Satelliten 1, 2, .., 11 bestimmt wurde, reduziert ist.

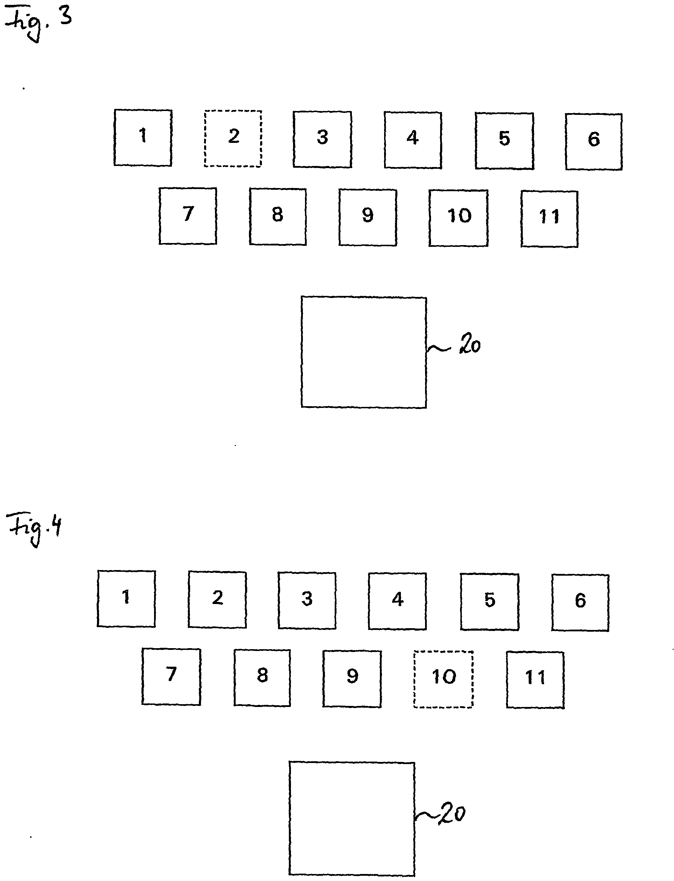

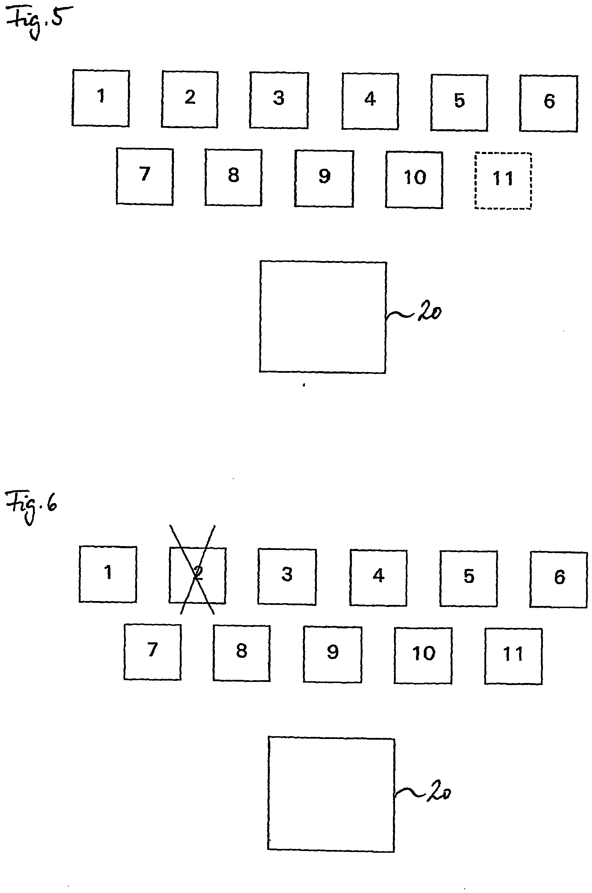

Dieses Vorgehen wird in entsprechender Weise wiederholt, wobei gemäß Fig. 3 Satellit 2 der ersten Teilmenge zugeschlagen ist. Hierbei wird das Integritätsrisiko für die zehn, in der zweiten Teilmenge verbleibenden Satelliten 1, 3, 4, ..., 11 ermittelt. Dieser Vorgang wird in entsprechender Weise für die Satelliten 3, 4, 5, 6, 7, 8, 9, 10 und 11 wiederholt, wobei dies in den Figuren 4 und 5 exemplarisch für die Satelliten 10 und 11 dargestellt ist.

Im Rahmen des ersten Schritts wurde damit das Integritätsrisiko für das Entfernen eines Satelliten aller möglichen elf Kombinationen ermittelt. Es wird im Beispiel davon ausgegangen, dass durch das Entfernen des Satelliten 2 sich das Integritätsrisiko am meisten verringern ließ. Satellit 2 wird damit für die weitere Betrachtung endgültig aus der Mehrzahl der elf Satelliten entfernt. Dies ist durch die Durchstreichung des Satelliten 2 symbolisiert. Satellit 2 ist damit der ersten Teilmenge zugeschlagen, während die zweite Teilmenge durch die Satelliten 1, 3, 4, 5, 6, 7, 8, 9, 10 und 11 gebildet ist. Dies ist schematisch in Fig. 6 dargestellt.

In einem zweiten Iterationsschritt bildet die gemäß Fig. 6 dargestellte zweite Teilmenge die Mehrzahl an Satelliten. Dies bedeutet, es wird für die verbleibenden zehn Satelliten 1, 3, 4, 5, 6, 7, 8, 9, 10 und 11 das gleiche Vorgehen, wie in den Figuren 2 bis 5 beschrieben, wiederholt. Dabei wird beispielsweise festgestellt, dass sich durch das weitere Entfernen des Satelliten 10 das Integritätsrisiko maximal verringern lässt. Satellit 10 wird deshalb der ersten Teilmenge zugeschlagen. Dies ist durch die Durchstreichung des Satelliten 10 symbolisiert. In der zweiten Teilmenge verbleiben damit die Satelliten 1, 3, 4, 5, 6, 7, 8, 9 und 11.

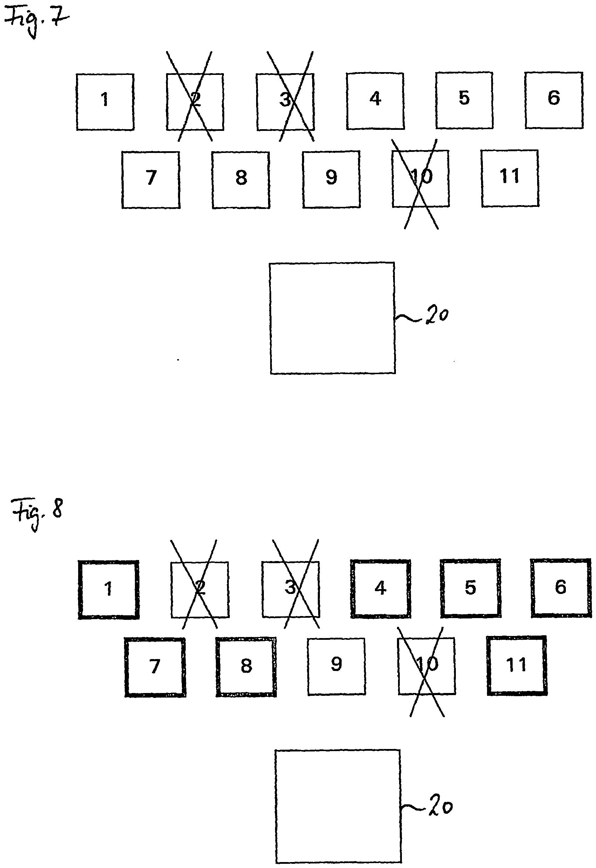

In einer dritten Iterationsschleife wird das beschriebene Vorgehen abermals wiederholt. Im Ausführungsbeispiel wird davon ausgegangen, dass durch das Entfernen des Satelliten 3 sich eine weitere, maximale Reduzierung des Integritätsrisikos erzielen lässt. Satellit 3 wird demnach ebenfalls der ersten Teilmenge zugeschlagen. In der zweiten Teilmenge verbleiben damit die Satelliten 1, 4, 5, 6, 7, 8, 9 und 11, deren Informationen zur Positionsbestimmung für das Endgerät 20 herangezogen werden. Dies ist schematisch in Fig. 7 dargestellt.

Im Ausführungsbeispiel werden drei Iterationsschritte der beschriebenen Art durchgeführt. In der Praxis können auch mehr oder weniger Iterationsschritte vorgenommen werden.

Es wird davon ausgegangen, dass das Integritätsrisiko, das durch die Nutzung der Informationen der Satelliten 1, 4, 5, 6, 7, 8, 9 und 11 ermittelt wurde, unterhalb eines tolerierbaren Integritätsrisikos liegt. Es wird deshalb im Weiteren für jeden der Satelliten 1, 4, 5, 6, 7, 8, 9 und 11 überprüft, ob dieser ein kritischer Satellit ist. In Fig. 8 sind kritische Satelliten mit einer fetten, durchgezogenen Linie dargestellt. Wie der Fig. 8 ohne weiteres zu entnehmen ist, stellen die Satelliten 1, 4, 5, 6, 7, 8 und 11 kritische Satelliten dar, während Satellit 9 ein unkritischer Satellit ist. Kritischer Satellit bedeutet dabei, dass durch das Entfernen eines kritischen Satelliten aus der verbliebenen zweiten Teilmenge das Integritätsrisiko der verbleibenden Satelliten wieder über das tolerierbare Integritätsrisiko ansteigen würde.

Im Weiteren wird überprüft, ob die Anzahl an kritischen Satelliten größer als eine vorgegebene, maximal tolerierte Anzahl an kritischen Satelliten ist. Im Ausführungsbeispiel wird angenommen, dass die Anzahl an maximal tolerierbaren kritischen Satelliten sechs ist. Diese Zahl kann in der Praxis von dem gewählten Wert abweichen. Wie aus Fig. 8 ohne weiteres entnehmbar ist, weist das Navigationssystem im Ausführungsbeispiel insgesamt sieben kritische Satelliten auf.

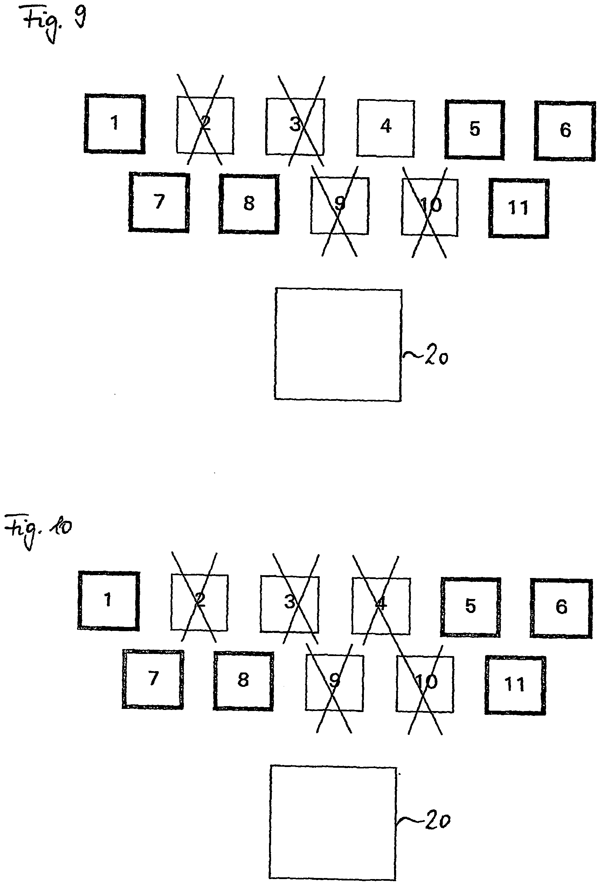

Es wird deshalb im Weiteren überprüft, ob in der zweiten Teilmenge auch unkritische Satelliten enthalten sind. Im Ausführungsbeispiel gemäß Fig. 8 stellt Satellit 9 einen unkritischen Satelliten dar. Dieser wird deshalb aus der zweiten Teilmenge entfernt und der ersten Teilmenge zugeordnet. Es hat sich herausgestellt, dass durch die beschriebene Strategie auch die Anzahl der kritischen Satelliten sich beeinflussen lässt. In der zweiten, im Weiteren nun noch betrachteten Teilmenge, verbleiben damit zunächst die Satelliten 1, 4, 5, 6, 7, 8 und 11. Es wird wiederum das Integritätsrisiko ermittelt und weiter für jeden einzelnen dieser Satelliten, ob dieser ein kritischer Satellit ist. Im Ausführungsbeispiel gemäß Fig. 9 ist durch das Entfernen des Satelliten 9 Satellit 4 zu einem unkritischen Satelliten geworden. Als kritische Satelliten verbleiben die Satelliten 1, 5, 6, 7, 8 und 11.

In der beschriebenen Weise wird nunmehr ebenfalls der unkritische Satellit 4 aus der zweiten Teilmenge entfernt und der ersten Teilmenge zugeordnet. Es wird wiederum das Integritätsrisiko für die verbleibenden Satelliten 1, 5, 6, 7, 8 und 11 ermittelt sowie, ob die Satelliten weiterhin kritische Satelliten sind. Im Ausführungsbeispiel lässt sich die Anzahl der kritischen Satelliten durch das Entfernen des unkritischen Satelliten 4 nicht weiter reduzieren, so dass die zweite Teilmenge schließlich die Satelliten 1, 5, 6, 7, 8 und 11 umfasst, welche jeweils kritische Satelliten sind. Da die Anzahl der kritischen Satelliten im Ausführungsbeispiel jedoch die Anzahl der maximal erlaubten kritischen Satelliten nicht mehr übersteigt, ist die Verfügbarkeit des Navigationssystems gewährleistet. Ferner liegt das Integritätsrisiko unter dem tolerierbaren Integritätsrisiko.

Durch das erfindungsgemäße Vorgehen hat sich dadurch die Verfügbarkeit des Navigationssystems in der Gesamtheit erhöht.

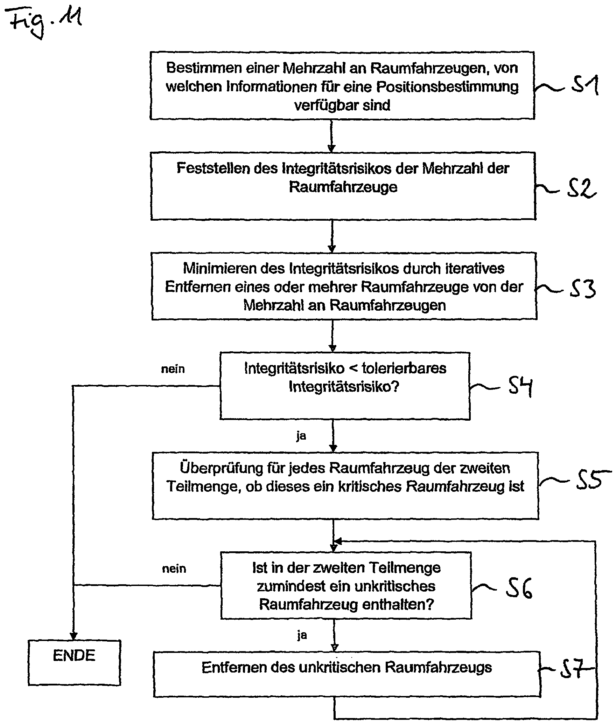

Fig. 11 zeigt exemplarisch das der Erfindung zugrunde liegende Verfahren in seinem Ablauf. In einem Schritt S1 wird eine Mehrzahl an Raumfahrzeugen bestimmt, von welchen Informationen über eine Positionsbestimmung verfügbar sind. In einem Schritt S2 wird das Integritätsrisiko der Mehrzahl der Raumfahrzeuge festgestellt. Dies bedeutet, es wird das Integritätsrisiko für diejenige Anzahl an Raumfahrzeugen festgestellt, welche maximal für die Positionsbestimmung des Endgeräts verwendet werden können. In einem Schritt S3 erfolgt das Minimieren des Integritätsrisikos durch iteratives Entfernen eines oder mehrer Raumfahrzeuge von der Mehrzahl an Raumfahrzeugen. In einem Schritt S4 wird überprüft, ob das ermittelte Integritätsrisiko kleiner als ein tolerierbares Integritätsrisiko ist. Ist dies nicht der Fall, so endet der Optimierungsalgorithmus an dieser Stelle. Im positiven Fall wird in einem Schritt S5 für jedes Raumfahrzeug der zweiten Teilmenge überprüft, ob dieses ein kritisches Raumfahrzeug ist. Sofern in der zweiten Teilmenge zumindest ein unkritisches Raumfahrzeug enthalten ist (Schritt S6) wird dieses in einem Schritt S7 aus der zweiten Teilmenge entfernt. Dies erfolgt so lange, bis in der zweiten Teilmenge kein unkritisches Raumfahrzeug mehr enthalten ist. An dieser Stelle endet der Optimierungsalgorithmus.

Durch eine gezielte Auswahl an verfügbaren Satelliten zur Positionsbestimmung eines Endgeräts lässt sich die Verfügbarkeit des globalen Navigationssystems auf einfache Weise verbessern.

### BEZUGSZEICHENLISTE

- 1: Raumfahrzeug
- 2: Raumfahrzeug
- 3: Raumfahrzeug
- 4: Raumfahrzeug
- 5: Raumfahrzeug
- 6: Raumfahrzeug
- 7: Raumfahrzeug
- 8: Raumfahrzeug
- 9: Raumfahrzeug
- 10: Raumfahrzeug
- 11: Raumfahrzeug
- 20: Endgerät
- S1: Verfahrensschritt
- S2: Verfahrensschritt
- S3: Verfahrensschritt
- S4: Verfahrensschritt
- S5: Verfahrensschritt
- S6: Verfahrensschritt

## Patentansprüche

1. Verfahren zum Erhöhen der Verfügbarkeit eines globalen Navigationssystems, welches mehrere Raumfahrzeuge (1, 2, ..., 11) umfasst, die zur Positionsbestimmung eines Endgeräts (20) jeweils Informationen an das Endgerät (20) übertragen, bei dem
- von einer Mehrzahl der Raumfahrzeuge (1, 2, ..., 11) jeweils Informationen an das Endgerät (20) übertragen werden;
- aus der Mehrzahl der Raumfahrzeuge (1, 2, ..., 11) eine erste Teilmenge mit zumindest einem ersten Raumfahrzeug und eine zweite Teilmenge mit zweiten Raumfahrzeugen (1, 2, ..., 11) ermittelt werden, wobei die zweite Teilmenge der Raumfahrzeuge (1, 2, ..., 11) sich aus der Differenz zwischen der Mehrzahl der Raumfahrzeuge (1, 2, ..., 11) und der ersten Teilmenge der Raumfahrzeuge (1, 2, ..., 11) bestimmt; und
- ausschließlich aus den von den zweiten Raumfahrzeugen (1, 2, ..., 11) übermittelten Informationen das Integritätsrisiko ermittelt wird, wobei die erste und die zweite Teilmenge der Raumfahrzeuge (1, 2, ..., 11) iterativ bestimmt werden, so dass das Integritätsrisiko, welches aus den, von den zweiten Raumfahrzeugen (1, 2, ..., 11) übermittelten, Informationen ermittelt wird, gegenüber dem Integritätsrisiko, das aus den Informationen aller Raumfahrzeuge (1, 2, ..., 11) der Mehrzahl an Raumfahrzeugen (1, 2, ..., 11) bestimmt wurde, minimiert ist,
- wobei zur Minimierung des Integritätsrisikos
a) eine Anzahl an Raumfahrzeugen (1, 2, ..., 11) aus der Mehrzahl an Raumfahrzeugen (1, 2, .., 11) der ersten Teilmenge zugeordnet und das Integritätsrisiko der in der zweiten Teilmenge verbleibenden zweiten Raumfahrzeuge (1, 2, ..., 11) ermittelt wird;
b) Schritt a) für, insbesondere alle, möglichen Kombinationen einer ersten Teilmenge wiederholt wird,
c) diejenigen zweiten Raumfahrzeuge (1, 2, ..., 11) der zweiten Teilmenge, bei denen das Integritätsrisiko minimal ist, für einen nächsten Iterationsschritt die Mehrzahl an Raumfahrzeugen (1, 2, ..., 11) bilden;
d) die Schritte a) bis c) wiederholt werden, bis ein minimales Integritätsrisiko erreicht ist,

2. Verfahren nach Anspruch 1, bei dem ausschließlich die Informationen der zweiten Teilmenge an Raumfahrzeugen (1, 2, ..., 11) zur Positionsbestimmung des Endgeräts (20) verwendet werden.

3. Verfahren nach Anspruch 1 oder 2, bei dem die Informationen der ersten Teilmenge an Raumfahrzeugen (1, 2, ..., 11) nicht zur Positionsbestimmung des Endgeräts (20) verwendet werden.

4. Verfahren nach einem der vorherigen Ansprüche, bei dem überprüft wird, ob das Integritätsrisiko geringer als ein tolerierbares Integritätsrisiko ist.

5. Verfahren nach einem der vorherigen Ansprüche, bei dem für jedes der zweiten Raumfahrzeuge (1, 2, ..., 11) der zweiten Teilmenge überprüft wird, ob dieses ein kritisches Raumfahrzeug ist.

6. Verfahren nach Anspruch 5, bei dem überprüft wird, ob die Anzahl an kritischen Raumfahrzeugen (1, 2, ..., 11) größer als eine Anzahl an erlaubten kritischen Raumfahrzeugen (1, 2, ..., 11) ist.

7. Verfahren nach einem der vorherigen Ansprüche, bei dem zur Minimierung der Anzahl an kritischen Raumfahrzeugen (1, 2, ..., 11)
a) ein unkritisches Raumfahrzeug aus der ermittelten, insbesondere optimalen, zweiten Teilmenge an Raumfahrzeugen (1, 2, ..., 11) der ersten Teilmenge zugeordnet wird;
b) die Anzahl an kritischen Raumfahrzeugen (1, 2, ..., 11) innerhalb der zweiten Teilmenge bestimmt wird; und
c) Schritt a) und b) iterativ wiederholt werden, bis in der zweiten Teilmenge keine unkritischen Raumfahrzeuge (1, 2, ..., 11) mehr ermittelbar sind.

8. Verfahren nach Anspruch 7, bei dem die Minimierung der Anzahl an kritischen Raumfahrzeugen (1, 2, ..., 11) durchgeführt wird, wenn die Anzahl kritischer Satelliten größer als eine maximal erlaubte Anzahl an kritischen Satelliten ist.

9. Endgerät (20) zum Bestimmen einer Position unter Verwendung eines globalen Navigationssystems, welches mehrere Raumfahrzeuge (1, 2, ..., 11) umfasst, die zur Positionsbestimmung des Endgeräts (20) jeweils Informationen an das Endgerät (20) übertragen, wobei das Endgerät (20) Mittel zur Durchführung des Verfahrens nach einem der Ansprüche 1 bis 10 umfasst.

10. Computerprogrammprodukt das direkt in den internen Speicher eines digitalen Computers geladen werden kann und Softwarecodeabschnitte umfasst, mit denen die Schritte gemäß einem der Ansprüche 1 bis 9 ausgeführt werden, wenn das Produkt auf einem Computer läuft.

## Claims

1. Method for increasing the availability of a global navigation system which comprises a plurality of space vehicles (1, 2, ..., 11) which find the position of a terminal (20) by each transmitting information to the terminal (20), in which
- a plurality of the space vehicles (1, 2, ..., 11) each transmit information to the terminal (20);
- from the plurality of the space vehicles (1, 2, ..., 11), a first subset containing at least one first space vehicle and a second subset containing second space vehicles (1, 2, ..., 11) are ascertained, wherein the second subset of the space vehicles (1, 2, ..., 11) is determined from the difference between the plurality of the space vehicles (1, 2, ..., 11) and the first subset of the space vehicles (1, 2, ..., 11); and
- exclusively from the information transmitted by the second space vehicles (1, 2, ..., 11), the integrity risk is ascertained, wherein the first and second subsets of the space vehicles (1, 2, ..., 11) are determined iteratively, so that the integrity risk which is ascertained from the information transmitted by the second space vehicles (1, 2, ..., 11) is minimized in comparison with the integrity risk which has been determined from the information from all space vehicles (1, 2, ..., 11) in the plurality of space vehicles (1, 2, ..., 11),
- wherein in order to minimize the integrity risk
a) a number of space vehicles (1, 2, ..., 11) from the plurality of space vehicles (1, 2, ..., 11) are associated with the first subset and the integrity risk of the second space vehicles (1, 2, ..., 11) remaining in the second subset is ascertained;
b) step a) is repeated for, in particular all, possible combinations of a first subset;
c) those second space vehicles (1, 2, ..., 11) in the second subset for which the integrity risk is at a minimum form the plurality of space vehicles (1, 2, ..., 11) for a subsequent iteration step;
d) steps a) to c) are repeated until a minimum integrity risk has been achieved.

2. Method according to Claim 1, in which exclusively the information from the second subset of space vehicles (1, 2, ..., 11) is used for finding the position of the terminal (20).

3. Method according to Claim 1 or 2, in which the information from the first subset of space vehicles (1, 2, ..., 11) is not used for finding the position of the terminal (20).

4. Method according to one of the preceding claims, in which a check is performed to determine whether the integrity risk is lower than a tolerable integrity risk.

5. Method according to one of the preceding claims, in which for each of the second space vehicles (1, 2, ..., 11) in the second subset a check is performed to determine whether said space vehicle is a critical space vehicle.

6. Method according to Claim 5, in which a check is performed to determine whether the number of critical space vehicles (1, 2, ..., 11) is greater than a number of permitted critical space vehicles (1, 2, ..., 11).

7. Method according to one of the preceding claims, in which in order to minimize the number of critical space vehicles (1, 2, ..., 11)
a) an uncritical space vehicle from the ascertained, in particular optimum, second subset of space vehicles (1, 2, ..., 11) is associated with the first subset;
b) the number of critical space vehicles (1, 2, ..., 11) within the second subset is determined; and
c) steps a) and b) are repeated iteratively until no further uncritical space vehicles (1, 2, ..., 11) can be ascertained in the second subset.

8. Method according to Claim 7, in which the number of critical space vehicles (1, 2, ..., 11) is minimized if the number of critical satellites is greater than a maximum permitted number of critical satellites.

9. Terminal (20) for finding a position using a global navigation system which comprises a plurality of space vehicles (1, 2, ..., 11) which find the position of the terminal (20) by each transmitting information to the terminal (20), wherein the terminal (20) comprises means for carrying out the method according to one of Claims 1 to 10.

10. Computer program product which can be loaded directly into the internal memory of a digital computer and comprises software code sections which are used to execute the steps according to one of Claims 1 to 9 when the product is running on a computer.

## Revendications

1. Procédé pour augmenter la disponibilité d'un système de navigation global comprenant plusieurs véhicules spatiaux (1, 2, ..., 11) qui transmettent à un terminal (20) des informations respectives pour la détermination de la position du terminal (20), dans lequel
- des informations respectives sont transmises par une pluralité des véhicules spatiaux (1, 2, ..., 11) au terminal (20) ;
- un premier sous-ensemble comprenant au moins un premier véhicule spatial et un second sous-ensemble comprenant au moins des seconds véhicules spatiaux (1, 2, ..., 11) sont déterminés à partir de la pluralité de véhicules spatiaux (1, 2, ..., 11), le second sous-ensemble des véhicules spatiaux (1, 2, ..., 11) étant déterminé à partir de la différence entre la pluralité des véhicules spatiaux (1, 2, ..., 11) et le premier sous-ensemble des véhicules spatiaux (1, 2, ..., 11) ; et
- le risque d'intégrité est déterminé uniquement à partir des informations transmises par les seconds véhicules spatiaux (1, 2, ..., 11), les premier et second sous-ensembles des véhicules spatiaux (1, 2, ..., 11) étant déterminés de manière itérative afin de minimiser le risque d'intégrité qui est déterminé à partir des informations transmises par les seconds véhicules spatiaux (1, 2, ..., 11), par rapport au risque d'intégrité qui a été déterminé à partir des informations de la totalité des véhicules spatiaux (1, 2, ..., 11) de la pluralité de véhicules spatiaux (1, 2, ..., 11),
- dans lequel, pour minimiser le risque d'intégrité,
a) un nombre de véhicules spatiaux (1, 2, ..., 11), parmi la pluralité de véhicules spatiaux (1, 2, ..., 11), est affecté au premier sous-ensemble et le risque d'intégrité des seconds véhicules spatiaux (1, 2, ..., 11) restant dans le second sous-ensemble est déterminé,
b) l'étape a) est répétée pour des combinaisons possibles d'un premier sous-ensemble, notamment pour la totalité d'entre elles,
c) ceux des seconds véhicules spatiaux (1, 2, ..., 11) du second sous-ensemble pour lesquels le risque d'intégrité est minimum forment la pluralité de véhicules spatiaux (1, 2, ..., 11) pour une étape d'itération suivante ;
d) les étapes a) à c) sont répétées jusqu'à ce qu'un risque d'intégrité minimal soit atteint.

2. Procédé selon la revendication 1, dans lequel seules les informations du second sous-ensemble de véhicules spatiaux (1, 2, ..., 11) destinés à la détermination de position du terminal (20) sont utilisées.

3. Procédé selon la revendication 1 ou 2, dans lequel les informations du premier sous-ensemble de véhicules spatiaux (1, 2, ..., 11) ne sont pas utilisées pour la détermination de position du terminal (20).

4. Procédé selon l'une quelconque des revendications précédentes, dans lequel il est vérifié si le risque d'intégrité est inférieur à un risque d'intégrité tolérable.

5. Procédé selon l'une quelconque des revendications précédentes, dans lequel, pour chacun des seconds véhicules spatiaux (1, 2, ..., 11) du second sous-ensemble, il est vérifié s'il s'agit d'un véhicule spatial critique.

6. Procédé selon la revendication 5, dans lequel il est vérifié si le nombre de véhicules spatiaux critiques (1, 2, ..., 11) est supérieur à un nombre de véhicules spatiaux critiques admissibles (1, 2, ..., 11).

7. Procédé selon l'une quelconque des revendications précédentes, dans lequel, pour minimiser le nombre de véhicules spatiaux critiques (1, 2, ..., 11)
a) un véhicule spatial non critique, dans le second sous-ensemble déterminé et notamment optimal de véhicules spatiaux (1, 2, ..., 11), est affecté au premier sous-ensemble ;
b) le nombre de véhicule spatiaux critiques (1, 2, ..., 11) est déterminé dans le second sous-ensemble ; et
c) les étapes a) et b) sont répétées de manière itérative jusqu'à ce qu'il ne reste plus de véhicules spatiaux non critiques (1, 2, ..., 11) dans le second sous-ensemble.

8. Procédé selon la revendication 7, dans lequel la minimisation du nombre de véhicules spatiaux critiques (1, 2, ..., 11) est effectuée lorsque le nombre de satellites critiques est supérieur à un nombre maximal admissible de satellites critiques.

9. Terminal (20) destiné à déterminer une position par utilisation d'un système de navigation global comprenant plusieurs véhicules spatiaux (1, 2, ..., 11) qui transmettent au terminal (20) des informations respectives pour la détermination de la position du terminal (20), dans lequel le terminal (20) comprend un moyen destiné à mettre en oeuvre le procédé selon l'une quelconque des revendications 1 à 10.

10. Produit à base de programme informatique pouvant être chargé directement dans la mémoire interne d'un calculateur numérique et comprenant des parties de code logiciel au moyen desquelles les étapes de l'une quelconque des revendications 1 à 9 sont exécutées lorsque le produit s'exécute sur un ordinateur.
